# EUROPEAN PATENT APPLICATION

(11) **EP 4 414 124 A1**
(43) Date of publication of application: **14.08.2024**
(21) Application number: 22946438.3
(22) Date of filing: 03.08.2022
(51) Int. Cl.: B23P 19/00, B65B 35/18

(54) **BOXING APPARATUS**

(30) Priority: 14.06.2022 CN 202221469440 U
(71) Applicant: Contemporary Amperex Technology Co., Limited, Ningde City, Fujian PRC 352100 (CN)
(72) Inventor: LV, Pengfei, 352100 Fujian (CN); SUN, Yanlin, 352100 Fujian (CN); WANG, Yanhui, 352100 Fujian (CN); CHEN, Weihua, 352100 (CN); LUAN, Yuhun, 352100 Fujian (CN)
(74) Representative: Gong, Jinping
(86) International application number: PCT/CN2022/110074
(87) International publication number: WO 2023/240765

(57) **Abstract**

An entering-into-box device for placing a target member into a box body are provided by embodiments of the present application. The entering-into-box device includes a main structure, a first positioning assembly, a second positioning assembly and a third positioning assembly. The main structure includes a mounting face; the first positioning assembly is connected to the mounting face; the second positioning assembly is connected to the mounting face and distributed at an outer peripheral side of the first positioning assembly; the third positioning assembly extends in a first direction and is connected to an end of the main structure. The first positioning assembly positions the target member in the first direction; the second positioning assembly positions the target member in a second direction and a third direction; and the third positioning assembly positions the box body at least in the second direction and the third direction. According to the embodiments of the present application, the process of the target member accurately entering into the box body can be realized.

## Description

### CROSS REFERENCE TO RELATED APPLICATION

This application claims priority to Chinese Patent Application No. 202221469440.8, titled "ENTERING-INTO-BOX DEVICE" and filed on June 14, 2022, which is hereby incorporated by reference in its entirety.

### TECHNICAL FIELD

The present application relates to the technical field of battery production, and in particular to an entering-into-box device.

### BACKGROUND

A battery is widely used in an electric-consuming apparatus, such as a mobile phone, a notebook computer, a battery car, an electric vehicle, an electric aircraft, an electric ship, an electric toy car, an electric toy ship, an electric toy airplane and an electric tool or the like.

In the development of the battery technology, how to improve the assembly efficiency of the battery is an important research direction in the battery technology.

### SUMMARY

An entering-into-box device is provided by embodiments of the present application, which can constrain the movement of a target member to improve the assembly efficiency of a battery.

The entering-into-box device provided by embodiments of the present application is configured to place the battery into a box body. The entering-into-box device includes a main structure, a first positioning assembly, a second positioning assembly and a third positioning assembly. The main structure includes a mounting face; the first positioning assembly is connected to the mounting face and configured to position the target member in a first direction; the second positioning assembly is connected to the mounting face, distributed at an outer peripheral side of the first positioning assembly and configured to position the target member in a second direction and a third direction; the third positioning assembly extends in the first direction, is connected to an end of the main structure and is configured to position the box body at least in the second direction and the third direction. The first direction, the second direction and the third direction are perpendicular to one another.

In the above technical solution, the entering-into-box device can position the target member in the first direction, second direction and third direction through the first positioning assembly and the second positioning assembly, and position the box body at least in the second direction and third directions through the third positioning assembly, so that the target member and the box body can be positioned with each other through the entering-into-box device.

In some embodiments, the entering-into-box device further includes protective assemblies. The protective assemblies are connected to the main structure, the protective assembly are respectively arranged at two sides of the main body adjacent to the third positioning assembly to form an accommodating space, and the second positioning assembly and the first positioning assembly are located in the accommodating space.

In the above technical solution, the protective assembly can protect the target member, so as to prevent the target member from falling and injuring in a case of sudden power failure.

In some embodiments, the mounting face is arranged to face the accommodating space.

In the above technical solution, the target member can be mounted on the mounting face from the accommodating space.

In some embodiments, a free end of each of the protective assemblies away from the main structure includes a support bottom portion extending towards the accommodating space, and an interval is formed between the support bottom portion and the second positioning assembly.

In the above technical solution, the support bottom portion partially surrounds around the target member to protect the target member, so as to enable the protective assembly to avoid the second positioning assembly.

In some embodiments, each of the protective assemblies further includes a driving part, and the driving part is arranged between the main structure and each of the protective assemblies to drive the support bottom portion away from the second positioning assembly.

In the above technical solution, the driving part can drive the protective assembly away from the main structure to make way for the target member entering into the accommodation space, and prevent the protective assembly from affecting a process of the target member entering into a box.

In some embodiments, the driving part includes a push rod and a cylinder for driving the push rod, the cylinder is arranged at an interior of the main structure, and the push rod is enable to extend out from the interior of the main structure and fixedly connected to each of the protective assemblies.

In the above technical solution, the driving assembly can realize the function of driving the protective assembly away from the main structure through the cylinder and the push rod.

In some embodiments, the second positioning assembly includes a plurality of first positioning pins arranged to be spaced apart from each other, and the first positioning pins are configured to limit a positional relationship between the entering-into-box device and the target member in the second direction and the third direction.

In the above technical solution, the second positioning assembly can define a relative position between the entering-into-box device and the target member in the second direction and the third direction.

In some embodiments, the plurality of first positioning pins are arranged at positions matching with a circumferential direction of the target member.

In the above technical solution, the first positioning pins can match with the target member in the circumferential direction, so as to realize the positioning function without affecting the target member entering into the box.

In some embodiments, the third positioning assembly includes a plurality of second positioning pins, and the plurality of second positioning pins are configured to limit a positional relationship between the entering-into-box device and the box body.

In the above technical solution, the third positioning assembly can define the relative position between the entering-into-box device and the target member.

In some embodiments, the plurality of second positioning pins are arranged at positions matching with an edge of the box body.

In the above technical solution, the second positioning pins can match with the edge of the box body to realize the positioning function without affecting the target member entering into the box.

In some embodiments, each of the second positioning pins further includes a bushing, and the bushing is sleeved onto each of the second positioning pins.

In the above technical solution, the bushings can limit the displacement of the target member in the first direction during the process of the target member entering into the box.

In some embodiments, a length of each of the first positioning pins is not larger than a length of the bushing, and the length of the bushing is less than a length of each of the second positioning pins.

In the above technical solution, the second positioning pins can cooperate with the box body without affecting the cooperation between the first positioning pins and the target member.

In some embodiments, the first positioning assembly includes a suction cup.

In the above technical solution, the first positioning assembly can apply a suction force to the target member and fix the relative position between the target member and a positioning device in the first direction.

In some embodiments, the first positioning assembly further includes a negative pressure assembly, and the negative pressure assembly is arranged at an interior of the main structure and connected with the suction cup.

In the above technical solution, the first positioning assembly can control the suction cup through the negative pressure assembly.

In some embodiments, the target member includes side plates respectively extending to two sides in the third direction and extending outwards, a plurality of first positioning holes are formed on the side plates, the box body is formed in a shape matching with the target member, and a plurality of second positioning holes are formed at an edge of the box body. The plurality of first positioning pins match with the first positioning holes, and the plurality of second positioning pins match with the second positioning holes.

In the above technical solution, the first positioning pins can cooperate with the first positioning holes, and the second positioning pins can cooperate with the second positioning holes, so that the entering-into-box device can realizes its function.

### BRIEF DESCRIPTION OF THE DRAWINGS

In order to more clearly illustrate the technical solutions of the embodiments of the present application, the drawings to be used in the description of the embodiments of the present application will be described briefly below. For those skilled in the art, other drawings can also be obtained according to these drawings without the inventive labor.
Fig. 1 shows a structural schematic view of an entering-into-box device according to some embodiments of the present application;
Fig. 2 shows a structural schematic view of an entering-into-box device in another perspective according to some embodiments of the present application; and
Fig. 3 shows a schematic view of aligning and assembling a battery with a box body through an entering-into-box device according to some embodiments of the present application;

### Reference numerals:

A-entering-into-box device; 1-main structure; 101-mounting face; 2- first positioning assembly; 20-suction cup; 21-negative pressure assembly; 3-second positioning assembly; 30-first positioning pin; 4-third positioning assembly; 40-second positioning pin; 41-bushing; 5-protective assembly; 50-accommodating space; 51-support bottom portion; 52-driving part; 521-cylinder; 522-push rod;
B-battery; 61-side plate; 62-first positioning hole;
C-box body; 7-second positioning hole.

### DETAILED DESCRIPTION

In a related art, a lifting tool is usually used to enter a battery into a box. The lifting tool usually does not provide sufficient constraints on the battery, which may lead to shake and even slip during the transportation of the battery, resulting in issues such as the battery inaccurately entering into the box, injury of the battery and the like, so as to affect the assembly efficiency of the battery. Moreover, the lifting tool in the related art usually uses a support bottom method to fix a module, so that a box body needs to reserve a certain avoidance space for the lifting tool. After the lifting tool is removed, due to a size of the box body being larger than a size of the battery, the battery may move in the box body in a certain degree, thereby affecting the usage performance of the battery.

In view of this, an entering-into-box device in embodiments of the present application can control the displacement of a target member in a first direction, a second direction and a third direction perpendicular to one another through a first positioning assembly and a second positioning assembly, so that it can fully constrain the movement of the target member; moreover, by using the third positioning assembly to position the box body at least in the second direction and the third direction, a relative position between the target member and the box body can be maintained during a process of entering into the box, so that the process of the target member accurately entering into the box body can be realized.

The entering-into-box device provided by the embodiments of the present application is configured to enter the target member into the box, suitable for the scenario of the battery entering into the box, and capable of accurately placing the battery into the box during the production process of the battery. At the same time, the entering-into-box device can also be suitable for the scenario of placing a battery cell into a casing body, or can be applied to any other steps of entering into the box or the casing body in the production of the battery. The present application does not restrict this.

For the convenience of explanation, the embodiments below take a battery B as an example as the target member of the embodiments of the present application.

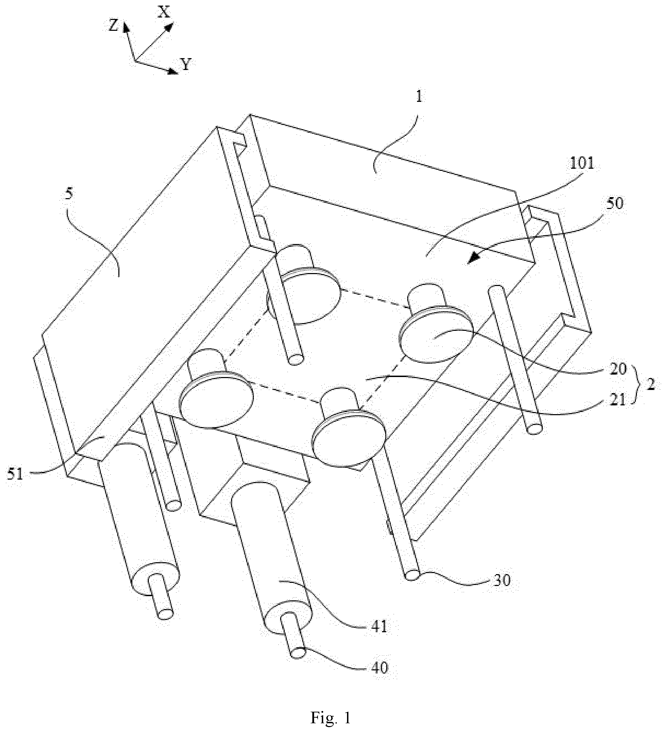

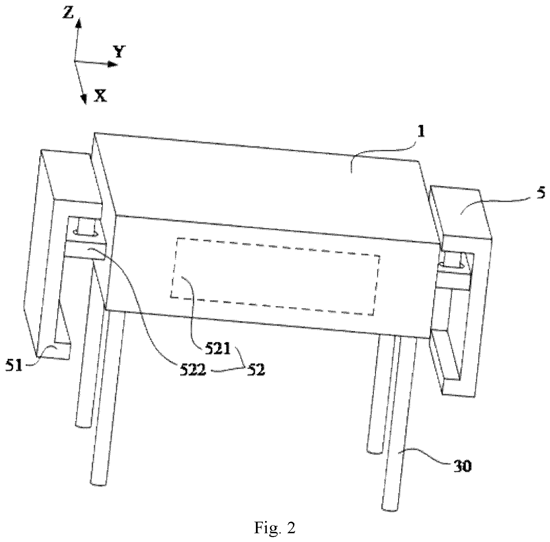

Fig. 1 shows a structural schematic view of an entering-into-box device A according to some embodiments of the present application. Fig. 2 shows a structural schematic view of the entering-into-box device A in another perspective according to some embodiments of the present application.

As shown in Fig. 1 and Fig. 2, the entering-into-box device A includes a main structure 1, a first positioning assembly 2, a second positioning assembly 3 and a third positioning assembly 4. The main structure 1 includes a mounting face 101; the first positioning assembly 2 may be connected to the mounting face 101 and configured to position the battery B in a first direction; the second positioning assembly 3 may be connected to the mounting face 101, distributed at an outer peripheral side of the first positioning assembly 2 and configured to position the target member B in a second direction and a third direction; the third positioning assembly 4 may extend in the first direction, be connected to an end of the main structure 1 and be configured to position a box body C at least in the second direction and the third direction. The first direction, the second direction and the third direction are perpendicular to one another.

It can be understood that when angles among the first direction, the second direction and the third directions is 85°-95°, the first direction, the second direction and third direction can be considered perpendicular to one another. For the convenience of explanation, in the following content, the first direction, the second direction and third direction are Z direction, X direction and Y direction, respectively. It should be understood that the first direction, the second direction and the third direction can also be perpendicular to one another.

The mounting face 101 may be a face contact with the battery B in the application. The first positioning assembly 2, second positioning assembly 3 and the third positioning assembly 4 may be arranged on the mounting face, so that it can facilitate contact with the battery B and box body C to achieve the positioning effect. Optionally, the mounting face can be a face of the main structure 1 facing downwards in the Z direction, or any one face of the main structure 1, which can depend on the specific situation of the battery B entering into the box body C.

The first positioning assembly 2 and the second positioning assembly 3 are assemblies that fix the relative position between the entering-into-box device A and the battery B in the first direction Z, the second direction X and the third direction Y During the transportation process of the battery B, the mounting face 101 of the main structure 1 is arranged to face battery B; the first positioning assembly 2 and the second positioning assembly 3 may be connected to the mounting face 101 of the main structure 1 and contact with battery B to fully fix the battery B with the main structure 1, and then adjust by moving the relative position between the entering-into-box device A and the battery B. That is to say, during the mounting process of the battery B, the battery B is located at a lower portion of the entering-into-box device A in the first direction Z, the first positioning assembly 2 fixes the position of battery B in the first direction Z, and the second positioning assembly 3 fixes the position of the battery B in the second direction X and the third direction Y, thereby completely fixing the relative position between the battery B and the entering-into-box device A in the first direction Z, the second direction X and the third direction Y

The third positioning assembly 4 is an assembly that fixes the relative position between the entering-into-box device A and the box body C. During the process of the battery B entering into the box, the third positioning assembly 4 is matched with the box body C. When the battery B is located at a lower portion of the entering-into-box device A in the first direction Z, the box body C should also be located at the lower portion of the entering-into-box device A in the first direction Z and arranged in sequence with the entering-into-box device A and the battery B from upper to lower in the first direction Z. Due to the battery B arranged between the entering-into-box device A and the box body C, in order to fix the relative position between the entering-into-box device A and the box body C, the third positioning assembly 4 should extend from an end of the main structure 1 in the first direction Z, so as to straddle the battery B and make contact with the box body C. Moreover, since the third positioning assembly 4 is in contact with the box body C from upper to lower in the first direction Z, the third positioning assembly 4 should have a relatively fixed position relationship between the entering-into-box device A and the box body C at least in the second direction X and the third direction Y, so as to achieve the positioning effect on the box body C.

By arranging the first positioning assembly 2 and the second positioning assembly 3, the battery B can be positioned to avoid the falling and injury accidents due to slipping or moving during transportation, and thus the relative position of the battery B can be accurately adjusted during the subsequent process of entering into the box. By arranging the third positioning assembly 4, the relative position between the entering-into-box device A and the box body C can be fixed, thereby reducing the problem of inaccurate position of the battery B during the process of entering into the box.

In some embodiments of the present application, the fixation of the relative position between the battery B and the box body C can be achieved through the entering-into-box device A. By arranging the entering-into-box device A, the battery B and the entering-into-box device A can be completely fixed. During the process of transporting the battery B, the position of the battery B is adjusted by adjusting the position of the entering-into-box device A. In addition, during the process of the battery B entering into the box, the battery B can align with box body C by adjusting the relative position between the entering-into-box device A and the box body C, so that the battery B can accurately enter into the box.

In some embodiments of the present application, the entering-into-box device A further includes protective assemblies 5. The protective assemblies 5 may be connected to the main structure 1, the protective assembly 5 can be respectively arranged at two sides of the main body 1 adjacent to the third positioning assembly 4 to form an accommodating space 50, and the second positioning assembly 3 and the first positioning assembly 2 can be located in the accommodating space 50.

The protective assemblies 5 may be a assembly that further positions the battery B. As an example, the protective assemblies 5 are respectively connected to two sides of the main structure 1 in the third direction Y The arranging positions of protective assemblies 5 are associated with the arranging position of the third positioning assembly 4. It should be understood that when the third positioning assembly 4 is connected to an end of the main structure 1 in the third direction Y, the protective assemblies 5 can also be respectively connected to two sides of the main structure 1 in the second direction X.

The accommodating space 50 is jointly defined by the protective assemblies 5 and the mounting face 101 to accommodate the battery B. The first positioning assembly 2 and the second positioning assembly 3 are located in the accommodation space 50 to position the battery B.

The protective assemblies 5 can be arranged to achieve secondary positioning on the battery B, so as to protect the battery B and prevent the battery B from falling and injury due to poor positioning with the entering-into-box device A during moving.

In some embodiments of the present application, the mounting face 101 may face towards the accommodating space 50.

By orienting the mounting face 101 towards the accommodating space 50, the battery B will be placed in the accommodating space 50 during the mounting of the entering-into-box device A, thereby achieving the positioning effect of the second positioning assembly 3 and the first positioning assembly 2.

In some embodiments of the present application, a free end of each of the protective assemblies 5 away from the main structure 1 includes a support bottom portion 51 extending towards the accommodating space 50, and an interval can be formed between the support bottom portion 51 and the second positioning assembly 3.

The support bottom portion 51 is a structure that extends from each of two sides of the main structure 1, extends towards the battery B and partially surrounds the battery B by a bent shape. The interval between the support bottom portion 51 and the second positioning assembly 3 refers to a certain distance between the support bottom portion 51 and the second positioning assembly 3, in order to meet the avoiding requirements that the second positioning assembly 3 is to be in contact with the battery B for positioning in the second direction X and the third direction Y

By arranging the support bottom portion 51, when the entering-into-box device A is mounted on the battery B, the protective assemblies 5 partially surround the battery B to achieve the protection effect.

In some embodiments of the present application, each of the protective assemblies 5 further includes a driving part 52, and the driving part 52 is arranged between the main structure 1 and each of the protective assemblies 5 to drive the support bottom portion 51 away from the second positioning assembly 3.

The driving assembly 52 is an assembly that can partially surround the battery B by driving the protective assemblies 5 to move. When the entering-into-box device A is mounted on the battery B, each of the protective assemblies 5 can drive the support bottom portion 51 away from the second positioning assembly 3, which means that the protective assemblies 5 can open from the two sides of the main structure 1 in the third direction Y, thus avoiding for the battery B. After the first positioning assembly 2 and the second positioning assembly 3 position the battery B, the driving assembly 52 can drive each of the protective assemblies 5 back to an original position, thereby supporting a bottom of the battery B. When the entering-into-box device A is positioned with the box body C, the driving assembly 52 can drive each of the protective assemblies 5 to open from each of two sides of the main structure 1 in the third direction Y again, in order to avoid the impact of the protective assembly 5 on the battery B entering into the box.

By arranging the driving part 52, it can drive the protective assembly 5 away from the main structure 1 to make way for the battery B entering into the accommodation space 50, and prevent the protective assembly 5 from affecting a process of entering the battery B into a box.

In some embodiments of the present application, the driving part 52 includes a push rod 522 and a cylinder 521 for driving the push rod 522, the cylinder 521 may be arranged at an interior of the main structure 1, and the push rod 522 can extend out from the interior of the main structure 1 and be fixedly connected to each of the protective assemblies 5. Optionally, the driving part 52 may include other structures.

The cylinder 521 is an assembly that can drive the push rod 522 to move reciprocatingly through an internal piston moving reciprocatingly. The cylinder 521 can push the push rod 522, so that it can allow the protective assemblies 5, which can be fixedly connected to the push rod 522, to open from the two sides of the main structure 1 and return back to the original position.

By arranging the cylinder 521 and the push rod 522, the protective assemblies 5 can achieve the reciprocating movement on the two sides of the main structure 1.

In some embodiments of the present application, each of the protective assemblies 5 includes a plurality of plate bodies connected in sequence. The plurality of plate bodies may respectively extend from two sides of the main structure 1 and partially surround the battery B. Due to the first positioning assembly 2 including the plurality of suction cups 20, the suction cups 20 apply the suction force to the battery B through a negative pressure assembly 21 electrically connected to the outside environment. In the case of a sudden power outage, the first positioning assembly 2 will lose the fixing effect on the battery B in the first direction Z. Therefore, the protective assembly 5 can prevent the battery B from being injured due to the sudden power outage.

It can be imagined that the protective assemblies 5 can also have other modes of movement. For example, an end of each of the protective assemblies 5 can be rotatably connected to an edge of the main structure 1. At this time, the driving assembly 52 can drive each of the protective assemblies 5 to rotate and open from each of the two sides of the main structure 1, which can also achieve the effect of avoiding the battery B. The present application does not restrict this.

In some embodiments of the present application, the second positioning assembly 3 includes a plurality of first positioning pins 30 arranged to be spaced apart from each other, and the first positioning pins 30 are configured to limit a positional relationship between the entering-into-box device A and the battery B in the second direction and the third direction.

A positioning pin is an assembly that can limit the freedom degree of an object in a two-dimensional space. Therefore, when the second positioning assembly 3 adopts the plurality of first positioning pins 30, the second positioning assembly 3 can position the battery B in the second direction X and the third direction Y The plurality of first positioning pins 30 can be arranged on the periphery of the first positioning assembly 2 on the mounting face 101 and arranged evenly.

By arranging the first positioning pins 30, it can define a relative position between the entering-into-box device A and the battery B in the second direction and the third direction.

In some embodiments of the present application, the plurality of first positioning pins 30 can be arranged at positions matching with a circumferential direction of the battery B.

The circumferential direction of battery B is a circumference of an edge of battery B in a horizontal direction.

By arranging the plurality of first positioning pins 30 in the circumferential direction of battery B, the impact on the process of battery B entering into the box can be reduced, and the forces on battery B in the X direction and the Y direction can be evenly distributed, so that the positioning effect of the battery B can be better.

In some embodiments of the present application, the third positioning assembly 4 includes a plurality of second positioning pins 40, and the plurality of second positioning pins 40 are configured to limit a positional relationship between the entering-into-box device A and the box body C.

Two second positioning pins 40 can be arranged at an end of the main structure 1 and protrude from the mounting face 101. Since the main structure 1 and the third positioning assembly 4 approach to the box body C in the first direction Z, the relative position between the entering-into-box device A and the box body C in the first direction Z can be fixed by a length of each of the second positioning pins 40 in the first direction Z, while the relative positions between the entering-into-box device A and the box body C in the second direction X and the third direction Y can be fixed by the cooperation of the second positioning pins 40 and the box body C. Therefore, the second positioning pins 40 should protrude from the mounting face 101, that is, the second positioning pins 40 can straddle the battery B and be in contact with the box body C.

By arranging the second positioning pins 40, it can define the relative position between the entering-into-box device and the target member.

In some embodiments of the present application, the plurality of second positioning pins 40 can be arranged at positions matching with an edge of the box body C.

By arranging the plurality of second positioning pins 40 at the edge of the box body C, the second positioning pins 40 can match with the edge of the box body C without affecting entering the battery B into the box, so as to realize the positioning function.

Optionally, the second positioning assembly 3 and the third positioning assembly 4 may also adopt other structures capable of realizing the functions, which is not limited in the present application.

In some embodiments of the present application, each of the second positioning pins 40 further includes a bushing 41, and the bushing 41 is sleeved onto each of the second positioning pins 40.

The bushing 41 may be a ring sleeve that can act as a gasket. The bushing 41 can be sleeved onto each of the second positioning pin 40, so that it can limit the distance that the second positioning pins 40 move in the first direction Z when the second positioning pins 40 cooperate with the edge of the box body C, that is, the distance that the entering-into-box device A moves in the first direction Z.

By arranging the bushing 41, it can limit a movement distance of the entering-into-box device A in the first direction Z, thereby limiting the displacement of the battery B in the first direction Z during the process of entering the battery B into the box.

In some embodiments of the present application, a length of each of the first positioning pins 30 is not larger than a length of the bushing 41, and the length of the bushing 41 is less than a length of each of the second positioning pins 40.

A diameter of the bushing 41 may be larger than a diameter of the second positioning hole 7, thereby limiting the displacement of the battery B in the first direction Z during the process of the battery B entering into the box, so as to prevent the battery B from entering into the box body C in advance. By arranging the bushing 41, it is convenient for the driving assembly 52 to drive each of the protective assemblies 5 away from the main structure 1 after a portion below the side plate 61 of the battery B enters into the box body C. Moreover, the lower portion of the battery B enters into the box body C, so that it can reduce a straight-line distance for the battery B falling into the box body C in the first direction Z, and reduce the probability of the battery falling and being injured during this process.

By ensuring that the length of each of the first positioning pins 30 is not larger than the length of the bushing 41, the second positioning pins 40 can be cooperated with the box body C without affecting the cooperation between the first positioning pins 30 and the battery B. The length of the bushing 41 can be smaller than the length of each of the second positioning pins 40, so that it can prevent the bushing 41 from affecting the positioning effect of the second positioning pins 40.

In some embodiments of the present application, the first positioning assembly 2 includes a suction cup 20.

The suction cup 20 is an assembly that can position an object by using the difference between internal atmospheric pressure and external atmospheric pressure. A plurality of suction cups 20 can be connected to the mounting face 101 and evenly distributed on the mounting face 101, thereby applying the suction force to the battery B and fixing the position the battery B. The embodiments of the present application do not have special restrictions on the number and arrangement position of suction cups 20. It only need to ensure that the force on battery B is even. The first positioning assembly 2 can also adopt other structures that can fix the position of the battery B in the first direction Z, and the present application does not restrict this.

By arranging the suction cup 20, it can position the battery B in the first direction Z by means of applying a suction farce to the battery B.

In some embodiments of the present application, the first positioning assembly 2 further includes a negative pressure assembly 21, and the negative pressure assembly 21 may be arranged at an interior of the main structure 1 and connected with the suction cup 20.

By arranging the negative pressure assembly 21, the suction cup 20 can achieve the vacuum effect, thereby applying the suction force to battery B during the entering-into-box device A mounted onto the battery B, thereby fixing the relative position between the entering-into-box device A and the battery B in the first direction Z. It can be imagined that the negative pressure assembly 21 can be a vacuum generator with a structure such as an air valve that helps to achieve the function of the negative pressure assembly 21. The negative pressure assembly 21 can also be electrically connected to the outside environment, so as to control the suction cup 20. This design may depend on the specific production situation.

By using negative pressure assembly 21, the first positioning assembly 2 can control the suction cup 20 to apply the suction force to the battery B through the negative pressure assembly 21, so as to position the battery B in the first direction Z.

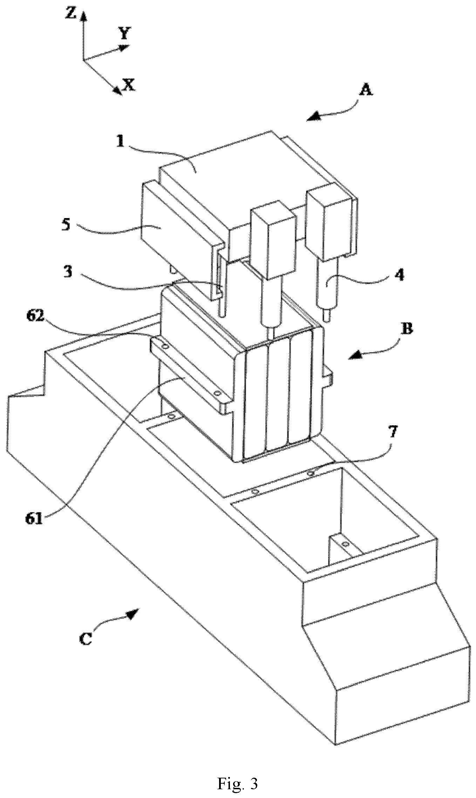

Fig. 3 shows a schematic view of aligning and assembling the battery B with the box body C through an entering-into-box device A according to some embodiments of the present application. As shown in Fig. 3, in some embodiments of the present application, the battery B may be a rectangular cuboid. The battery B includes side plates 61 respectively extending to two sides of the battery B in the third direction Y, a plurality of first positioning holes 62 can be formed on the side plates 61, the box body C may be formed in a shape matching with a shape of the battery B, and a plurality of second positioning holes 7 may be formed at an edge of the box body C. During the process of entering the battery B into the box, the plurality of first positioning pins 30 may match with the first positioning holes 7, and the plurality of second positioning pins 40 may match with the second positioning holes 7. It should be understood that the structures of the battery B and the box body C shown in the figure are only examples.

According to the above content, it can be known that the plurality of first positioning pins 30 are arranged at positions matching with the circumferential direction of the battery B, and the positions correspond to the first positioning holes 62; the plurality of second positioning pins 40 are arranged at positions matching with the edges of the box body C, and the positions correspond to the second positioning holes 7. Therefore, the entering-into-box device A can achieve the function of battery B entering into box body C.

Optionally, the arrangement of the first positioning pins 30 and the second positioning pins 40, or the second positioning assembly 3 and the third positioning assembly 4, should be determined by the specific structure of battery B and box body C.

In the working process of the entering-into-box device A provided by some embodiments of the present application, the driving assembly 52 drives each of the protective assemblies 5 to move away from the main structure 1 in the third direction Y, so as to prevent the entering-into-box device A from being obstructed by the side plate 61 during the downward movement in the first direction Z. The entering-into-box device A can be mounted onto the battery B, so that the first positioning assembly 2 and the second positioning assembly 3, i.e. the suction cup 20 and the first positioning pins 30, can position the battery B. The suction cup 20 can be attached to a top portion of battery B. Each of the first positioning pins 30 can be matched with the first positioning hole 62 on the side plate 61 of the battery B. Then, the driving assembly 52 may drive each of the protective assemblies 5 back to the original position, so that the support bottom portion 51 can intersect with the side plate 61, so as to double protect the position of the battery B in the first direction Z. Then the entering-into-box device A and the battery B can be move as a whole. The positions of the entering-into-box device A and the box body C can be aligned through the third positioning assembly 4, i.e. the second positioning pins 40 and the second positioning hole 7 of the box body C, so that the driving assembly 52 can drive each of the protective assemblies 5 again to move away from the main structure 1 in the third direction Y, so as to avoid the battery B in the process of entering-into the box. At last, the suction cup 20 can stop applying the suction force to the battery B, the battery B can fall into the box body C, and the battery B can enter into the box.

It can be imagined that the entering-into-box device A can be electrically connected to the outside environment, and the interior of the entering-into-box device A can include an electronic module that indicate the position of the entering-into-box device A in the workshop or the processing line, or can control the entering-into-box device A to move. The top portion of the entering-into-box device A can also be connected to a track or a manipulator, so as to facilitate the position of the entering-into-box device A to be changed and achieve alignment between the battery B and box body C. The above arrangements are all optional and the present application does not restrict this.

In summary, the entering-into-box device A in the embodiments of the present application can control the displacement of the battery B in the first direction Z, the second direction X and the third direction Y by the first positioning assembly 2 including the plurality of suction cups 20 and the second positioning assembly 3 including the plurality of first positioning pins 30 arranged at intervals, so that it can fully constrain the movement of the battery B; Moreover, the relative position between the battery B and the box body C can be maintained during the process of entering into the box through the third positioning assembly 4 including the plurality of second positioning pins 40, thereby realizing the battery accurately entering into the box.

It should be noted that in the absence of conflicts, the embodiments and the features in the embodiments in the present application can be combined with one another.

At last, it should be noted that the above embodiments are only used to illustrate the technical solutions of the present application, not to restrict the technical solution; although the present application has been described in detail with reference to the aforementioned embodiments, those skilled in the art should understand that they can still modify the technical solutions recited in the aforementioned embodiments or equivalently replace some of the technical features, but these modifications or substitutions do not make the essence of the corresponding technical solutions deviate from the gist and scope of the technical solutions in the various embodiments of the present application.

## Claims

1. An entering-into-box device for placing a target member into a box body, comprising:
a main structure (1), comprising a mounting face (101);
a first positioning assembly (2), connected to the mounting face (101) and configured to position the target member in a first direction;
a second positioning assembly (3), connected to the mounting face (101), distributed at an outer peripheral side of the first positioning assembly (2), and configured to position the target member in a second direction and a third direction; and
a third positioning assembly (4), extending in the first direction, connected to an end of the main structure (1), and configured to position the box body at least in the second direction and the third direction;
wherein the first direction, the second direction and the third direction are perpendicular to one another.

2. The entering-into-box device according to claim 1, further comprising protective assemblies (5), wherein the protective assemblies (5) are connected to the main structure (1), the protective assemblies (5) are respectively arranged at two sides of the main body (1) adjacent to the third positioning assembly (4) to form an accommodating space (50), and the second positioning assembly (3) and the first positioning assembly (2) are located in the accommodating space (50).

3. The entering-into-box device according to claim 2, wherein the mounting face (101) is arranged to face the accommodating space (50).

4. The entering-into-box device according to any one of claims 2-3, wherein a free end of each of the protective assemblies (5) away from the main structure (1) comprises a support bottom portion (51) extending towards the accommodating space (50), and an interval is formed between the support bottom portion (51) and the second positioning assembly (3).

5. The entering-into-box device according to claim 4, wherein each of the protective assemblies (5) further comprises a driving part (52), and the driving part (52) is arranged between the main structure (1) and each of the protective assemblies (5) to drive the support bottom portion (51) away from the second positioning assembly (3).

6. The entering-into-box device according to claim 5, wherein the driving part (52) comprises a push rod (522) and a cylinder (521) for driving the push rod (522), the cylinder (521) is arranged at an interior of the main structure (1), and the push rod (522) is able to extend out from the interior of the main structure (1) and is fixedly connected to each of the protective assemblies (5).

7. The entering-into-box device according to any one of claims 1-6, wherein the second positioning assembly (3) comprises a plurality of first positioning pins (30) spaced apart from each other, and the first positioning pins (30) are configured to limit a positional relationship between the entering-into-box device and the target member in the second direction and the third direction.

8. The entering-into-box device according to claim 7, wherein the plurality of first positioning pins (30) are arranged at positions matching with a circumferential direction of the target member.

9. The entering-into-box device according to any one of claims 7-8, wherein the third positioning assembly (4) comprises a plurality of second positioning pins (40), and the second positioning pins (40) are configured to limit a positional relationship between the entering-into-box device and the box body.

10. The entering-into-box device according to claim 9, wherein the plurality of second positioning pins (40) are arranged at positions matching with an edge of the box body.

11. The entering-into-box device according to claim 9, wherein each of the second positioning pins (40) further comprises a bushing (41), and the bushing (41) is sleeved onto each of the second positioning pins (40).

12. The entering-into-box device according to claim 11, wherein a length of each of the first positioning pins (30) is not larger than a length of the bushing (41), and the length of the bushing (41) is less than a length of each of the second positioning pins (40).

13. The entering-into-box device according to any one of claims 1-12, wherein the first positioning assembly (2) comprises a suction cup (20).

14. The entering-into-box device according to claim 13, wherein the first positioning assembly (2) further comprises a negative pressure assembly (21), and the negative pressure assembly (21) is arranged at an interior of the main structure (1) and connected with the suction cup (20).

15. The entering-into-box device according to any one of claims 10-12, wherein the target member comprises side plates respectively extending to two sides in the third direction and extending outwards, a plurality of first positioning holes are formed on the side plates, the box body is formed in a shape matching with the target member, and a plurality of second positioning holes are formed at the edge of the box body;
the plurality of first positioning pins (30) match with the first positioning holes, and the plurality of second positioning pins (40) match with the second positioning holes.
